# FASCICULE DE BREVET EUROPEEN

(11) **EP 0 753 246 B1**
(45) Date de publication et mention de la délivrance du brevet: **26.09.2001**
(21) Numéro de dépôt: 96440053.5
(22) Date de dépôt: 01.07.1996
(51) Int. Cl.: A01D 34/66, A01D 57/30

(54) **Faucheuse avec un dispositif d'andainage perfectionné**
Mähmaschine mit einer verbesserter Schwadvorrichtung
Mowing-machine with an improved swathing device

(30) Priorité: 13.07.1995 FR 9508701
(43) Date de publication de la demande: 15.01.1997
(73) Titulaire: KUHN S.A., 67700 Saverne (FR)
(72) Inventeur: Neuerburg, Horst, 67700 Saverne (FR); Walter, René, 57620 Goetzenbruck (FR); Wolff, Michel, 67670 Mommenheim (FR)

(56) Documents cités:
- DE-A- 2 147 056
- DE-A- 3 501 133
- FR-A- 2 317 869
- FR-A- 2 377 759
- GB-A- 2 023 393
- US-A- 3 772 865

## Description

La présente invention concerne une faucheuse comportant :
- une structure de liaison destinée à lier ladite faucheuse à un véhicule moteur ;
- un mécanisme de coupe muni d'éléments de coupe animés comportant des outils de coupe et ;
- un dispositif d'andainage destiné à déplacer latéralement, vers le plan médian du mécanisme de coupe, le produit coupé par les éléments de coupe avant que celui-ci ne soit déposé sur le sol, ledit dispositif d'andainage comportant au moins un élément de guidage du fourrage coupé, situé dans le voisinage de l'une des extrémités latérales du mécanisme de coupe et, compte tenu du sens d'avance au travail, derrière le front de coupe du mécanisme de coupe, ledit élément de guidage comprenant au moins deux rotors disposés transversalement à la direction d'avance au travail et d'axe de rotation dirigé vers le haut durant le travail, lesdits rotors étant suspendus à une structure porteuse liée au mécanisme de coupe et/ou à la structure de liaison, lesdits rotors étant entraînés en rotation au moyen d'un mécanisme d'entraînement.

Il est connu dans l'état de la technique une telle faucheuse, par exemple par le document FR 2 317 869, comportant également un mécanisme de coupe et un dispositif d'andainage situé dans le voisinage de l'une des extrémités latérales dudit mécanisme de coupe.

Ce dispositif d'andainage comporte une bande d'andainage flexible guidée par deux rotors disposés transversalement à la direction d'avance au travail et d'axe de rotation dirigé vers le haut. Le premier rotor est fixé d'une manière concentrique sur l'élément de coupe le plus proche de l'extrémité latérale du mécanisme de coupe au voisinage de laquelle est aménagé le dispositif d'andainage, tandis que le deuxième rotor est monté libre en rotation. L'élément de coupe, le plus proche de l'extrémité latérale du mécanisme de coupe, est animé d'un mouvement de rotation de manière qu'il coupe le produit et le projette vers la partie médiane dudit mécanisme de coupe. Le premier rotor fixé sur cet élément de coupe anime la bande d'andainage flexible dans le même sens de rotation que ledit élément de coupe permettant d'andainer davantage le produit coupé.

Ce dispositif d'andainage présente cependant deux inconvénients majeurs.

Un premier inconvénient de ce dispositif d'andainage connu résulte de la vitesse de rotation de la bande d'andainage. Le premier rotor fixé sur l'élément de coupe tourne à la même vitesse que ledit élément de coupe. Cette vitesse est trop grande pour la bande d'andainage car à cette vitesse la bande glisse sur le fourrage coupé sans l'entraîner pour l'andainer.

Un deuxième inconvénient de ce dispositif d'andainage résulte du fait que le produit coupé vient en contact sur le brin mou de la bande d'andainage ce qui est gênant puisque, lors du travail, les battements dudit brin mou ne permettent pas un bon contact du produit coupé sur ladite bande d'andainage ce qui est préjudiciable au bon fonctionnement de la faucheuse.

A cet effet, le document FR 2 419 006 propose de monter le premier rotor libre en rotation et d'entraîner le deuxième rotor au moyen d'un mécanisme d'entraînement de manière que le brin tendu de la bande d'andainage soit situé du côté du flux du produit coupé. Ce mécanisme d'entraînement est situé partiellement à l'intérieur du premier rotor et entraîne le deuxième rotor à une vitesse différente de la vitesse à laquelle tournent les éléments de coupe du mécanisme de coupe.

Le mécanisme d'entraînement comporte un organe d'accouplement équipé d'une poulie, sur laquelle passe une courroie entraînant une poulie de diamètre supérieur, liée en rotation avec le deuxième rotor, ladite courroie s'étendant dans la partie intérieure de la bande d'andainage. Pour ce faire, le premier et le deuxième rotor sont chacun composés de deux parties entre lesquelles passe la courroie.

Compte tenu du fait que le premier rotor s'étend au-dessus de l'élément de coupe le plus proche de l'extrémité latérale du mécanisme de coupe, la bande d'andainage s'étend au-dessus du plan de coupe défini par les outils de coupe des éléments de coupe correspondants. Une telle conception permet à une partie du produit coupé de passer sous la bande d'andainage et ne sera pas andainée. En sus, une telle conception avec une bande d'andainage, telle que décrite auparavant, est relativement onéreuse à réaliser, et est sensible aux bourrages. En effet, la bande d'andainage et les rotors sont exposés directement au flux du produit coupé, ce qui favorise les bourrages, notamment lorsque une partie du produit coupé vient se prendre entre la bande d'andainage et les rotors.

Le but de la présente est de réaliser une faucheuse équipée d'un dispositif d'andainage regroupant efficacement le produit coupé par les outils de coupe du mécanisme de coupe sur une grande largeur en un andain relativement étroit, le dispositif d'andainage devant être insensible aux bourrages, de conception simple et compacte, et peu chère.

A cet effet, les rotors de la faucheuse sont des rotors d'andainage disposés dans le voisinage immédiat l'un de l'autre et uniquement suspendus à la structure porteuse par le haut et, l'extrémité inférieure d'un rotor d'andainage s'étend au moins jusqu'au plan de coupe défini par les outils de coupe des éléments de coupe.

Selon une caractéristique supplémentaire de l'invention, les rotors d'andainage d'un même élément de guidage sont disposés l'un par rapport à l'autre, de telle sorte qu'une droite horizontale s'appuyant sur la partie frontale desdits rotors d'andainage s'étende, en vue de dessus, vers l'arrière en direction du plan médian du mécanisme de coupe. Grâce à cette caractéristique le flux du produit coupé est canalisé vers l'arrière et vers le plan médian du mécanisme de coupe.

Selon une autre caractéristique supplémentaire de l'invention, selon une vue suivant la direction d'avance au travail, le rotor d'andainage, situé le plus près du plan médian du mécanisme de coupe, tangente au moins sensiblement le rotor d'andainage situé le plus à l'extrémité ou chevauche quelque peu celui-ci, afin d'obtenir une bonne étanchéité entre les deux rotors d'andainage et éviter qu'une partie du produit coupé se faufile entre lesdits rotors d'andainage.

Selon une autre caractéristique supplémentaire de l'invention, au moins le rotor d'andainage, situé le plus près du plan médian du mécanisme de coupe, comporte une enveloppe essentiellement dirigée vers le haut et une partie inférieure essentiellement dirigée radialement vers l'extérieur.

Avantageusement, ladite partie inférieure, essentiellement dirigée radialement vers l'extérieur, s'étend jusque sous l'extrémité inférieure du rotor d'andainage adjacent et a la forme d'un tronc de cône.

Selon une autre caractéristique supplémentaire de l'invention, la partie inférieure d'un rotor d'andainage est réalisée en matière souple de manière à épouser les dénivellations du sol et à éviter qu'une partie du produit coupé ne se faufile entre le rotor d'andainage et le sol.

Selon une autre caractéristique supplémentaire de l'invention, le rotor d'andainage, située le plus à l'extérieur, comporte une enveloppe qui s'étend jusque dans le proche voisinage des trajectoires balayées par les outils de coupe de l'élément de coupe situé le plus à l'extérieur du mécanisme de coupe et de l'élément de coupe adjacent audit élément de coupe, afin de permettre que le produit coupé soit pris en charge par ledit rotor d'andainage avant qu'il ne soit déposé sur le sol.

Selon une autre caractéristique supplémentaire de l'invention, l'axe de rotation du rotor d'andainage, situé le plus à l'extérieur, s'étend au moins sensiblement dans le plan vertical dirigé suivant la direction d'avance au travail et s'étendant à mi-distance entre l'axe de rotation de l'élément de coupe situé le plus à l'extérieur du mécanisme de coupe et l'axe de rotation de l'élément de coupe adjacent audit élément de coupe.

Selon une autre caractéristique supplémentaire de l'invention, l'élément de coupe extérieur, situé à l'extrémité du mécanisme de coupe où est prévu un ensemble de guidage, comporte une coiffe d'andainage et en vue suivant la direction d'avance au travail, le rotor d'andainage correspondant, situé le plus à l'extérieur, tangente au moins sensiblement ladite coiffe d'andainage ou chevauche quelque peu celle-ci, afin d'obtenir une bonne étanchéité entre ladite coiffe d'andainage et ledit rotor d'andainage et éviter qu'une partie du produit coupé ne s'échappe entre ces derniers.

Selon une autre caractéristique supplémentaire de l'invention, l'axe de rotation d'un rotor d'andainage est au moins sensiblement vertical.

Selon une autre caractéristique supplémentaire de l'invention, les rotors d'andainage sont déplaçables en hauteur de manière à pouvoir les adapter aux différentes conditions de travail.

Selon une autre caractéristique supplémentaire de l'invention, l'enveloppe de chaque rotor d'andainage est au moins sensiblement cylindrique.

Selon une autre caractéristique supplémentaire de l'invention, l'enveloppe de l'un au moins des rotors d'andainage d'un élément de guidage comporte des éléments d'entraînement répartis de manière au moins sensiblement uniforme et s'étendent au moins sensiblement suivant une génératrice de ladite enveloppe. Grâce à ces éléments d'entraînement le produit coupé est entraîné efficacement par le (les) rotor(s) d'andainage et ne glisse pas sur ces derniers.

Selon une autre caractéristique de l'invention, au moins l'enveloppe du rotor d'andainage, située le plus près du plan médian du mécanisme de coupe, est pourvue d'éléments d'entraînement.

Selon une autre caractéristique supplémentaire de l'invention, la vitesse linéaire périphérique du rotor d'andainage, situé le plus près du plan médian du mécanisme de coupe, est égale ou supérieure à la vitesse linéaire périphérique du rotor d'andainage situé le plus à l'extérieur. Une telle conception permet, notamment lorsque la vitesse linéaire périphérique du rotor d'andainage situé le plus près du plan médian du mécanisme de coupe est supérieure, de tirer le produit coupé en provenance du rotor d'andainage situé le plus à l'extérieur dans la direction du plan médian, afin d'obtenir un bon écoulement dudit produit coupé.

Selon une autre caractéristique supplémentaire de l'invention, le mécanisme d'entraînement des rotors d'andainage d'un élément de guidage est situé au-dessus desdits rotors d'andainage de manière à le mettre à l'abri du produit coupé.

Préférentiellement le mécanisme d'entraînement est situé au-dessus de la structure porteuse.

Selon une autre caractéristique supplémentaire de l'invention, le mécanisme d'entraînement comporte une courroie de transmission s'étendant au moins sensiblement horizontalement.

Selon une autre caractéristique supplémentaire de l'invention un élément de guidage est disposé à chaque extrémité latérale du mécanisme de coupe, ces deux éléments de guidage formant le dispositif d'andainage. Un agencement de ce genre permet de déplacer le produit coupé à chaque extrémité latérale du mécanisme de coupe en direction du plan médian de manière à andainer davantage le produit coupé.

Avantageusement, le mécanisme d'entraînement de l'élément de guidage, situé à l'extrémité où le mécanisme de coupe est entraîné, reçoit le mouvement directement à partir de la transmission animant ledit mécanisme de coupe, tandis que le mécanisme d'entraînement de l'élément de guidage, situé à l'autre extrémité du mécanisme de coupe, reçoit le mouvement à partir dudit mécanisme de coupe.

D'autres objets et caractéristiques de l'invention ressortiront de la description ci-après, avec référence aux dessins annexés qui représentent, à titre d'exemple non limitatif, une forme de réalisation de la faucheuse selon l'invention.

Sur ces dessins :
- la figure 1 représente une faucheuse selon l'invention vue de l'arrière ;
- la figure 2 représente une vue de dessus de la faucheuse représentée sur la figure 1, sans les capots de protection des mécanismes d'entraînement ;
- la figure 3 représente, à une échelle agrandie, une vue de l'arrière suivant la flèche III définie sur la figure 2 d'une partie de la transmission animant le mécanisme de coupe, sur laquelle ont été effectuées différentes coupes partielles ;
- la figure 4 représente une coupe par le plan IV-IV définie sur la figure 1 ;
- la figure 5 représente, à une échelle agrandie, une coupe partielle par le plan V définie sur la figure 2.

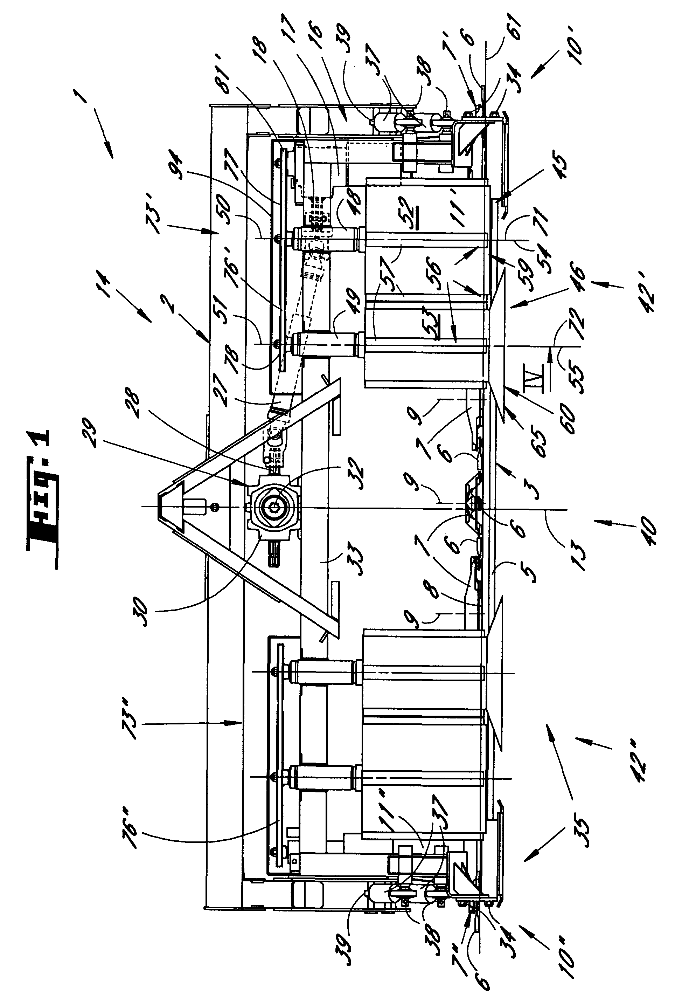

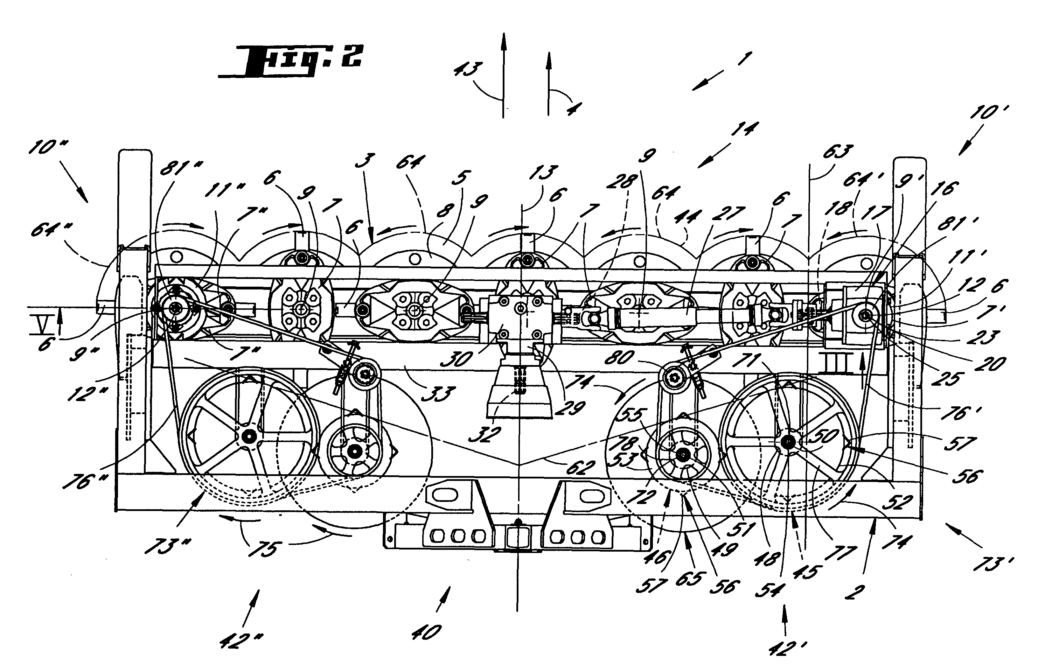

La faucheuse (1) représentée sur les figures 1 et 2 est, selon l'exemple représenté, une faucheuse destinée à être liée à la partie frontale d'un véhicule moteur (non représenté) au moyen d'une structure de liaison (2). Cette faucheuse (1) comporte un mécanisme de coupe (3) s'étendant, lors du travail, transversalement à la direction d'avance (4) au travail. Le mécanisme de coupe (3) se compose d'un carter (5) qui supporte un certain nombre d'éléments de coupe (7, 7', 7") s'étendant à la face supérieure (8) du carter (5). Chaque élément de coupe (7,7',7") comporte des outils de coupe (6), et est destiné à tourner autour d'un axe de rotation (9, 9', 9") respectif au moins sensiblement vertical. Chaque élément de coupe (7', 7") extérieur situé à l'extrémité latérale (10', 10") correspondante du mécanisme de coupe (3) comporte une coiffe d'andainage (11', 11") fixée sur le dessus dudit élément de coupe (7' 7") correspondant. Chaque coiffe d'andainage (11', 11") est de forme conique, et est fixée sur l'élément de coupe (7', 7") correspondant de manière que son axe médian (12', 12") soit au moins sensiblement confondu avec l'axe de rotation (9', 9") dudit élément de coupe (7', 7").

Ces deux coiffes d'andainage (11', 11") tournent avec les deux éléments de coupe (7', 7") extérieurs de manière que le produit coupé subisse un premier andainage vers le plan médian (13) du mécanisme de coupe (3).

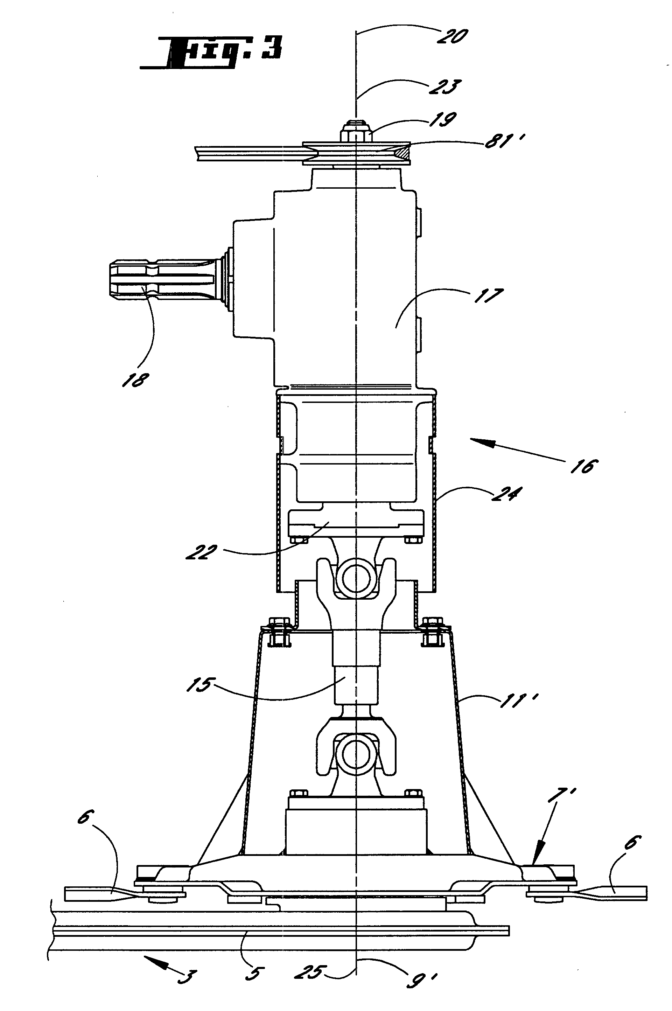

L'entraînement en rotation des éléments de coupe (7, 7', 7") est produit par des éléments d'entraînement non représentés, logés d'une manière connue de l'homme de l'art, à l'intérieur du carter (5) du mécanisme de coupe (3). L'entraînement en rotation de ces éléments d'entraînement (7, 7', 7") est réalisé par le premier élément de coupe (7'), lequel reçoit le mouvement d'une transmission (14). A cet effet, on voit à la lumière de la figure 3 que la transmission (14) comporte un premier arbre de transmission (15) à joints universels s'étendant partiellement à l'intérieur de la coiffe d'andainage (11') et étant fixé d'une part sur la partie supérieure du premier élément de coupe (7') et d'autre part à un premier dispositif de transmission (16). Ce dispositif de transmission (16) comporte un carter (17), un arbre d'entrée (18), un arbre de sortie supérieur (19) d'axe longitudinal (20) au moins sensiblement vertical s'étendant vers le haut et un arbre de sortie inférieur (22) d'axe longitudinal (23) s'étendant vers le bas au moins sensiblement confondu avec l'axe longitudinal (20) de l'arbre de sortie supérieur (19), le premier arbre de transmission (15) à joints universels étant fixé audit arbre de sortie inférieur (22). On notera que les axes longitudinaux (20, 23) de l'arbre de sortie supérieur (19) et l'arbre de sortie inférieur (22) sont au moins sensiblement confondus avec l'axe de rotation (9') du premier élément de coupe (7').

Aux alentours de la partie inférieure du carter (17) est prévu un protecteur (24) de forme cylindrique destiné à protéger l'arbre de sortie inférieur (22) et le premier arbre de transmission (15) à joints universels. A cet effet, le protecteur (24) est fixé au carter (17) et s'étend vers le bas en direction de la coiffe d'andainage (11') de manière à envelopper la partie du premier arbre de transmission (15) qui s'étend en dehors de ladite coiffe d'andainage (11'). On notera en sus, que l'axe longitudinal (25) du protecteur (24) est au moins sensiblement confondu avec l'axe de rotation (9') du premier élément de coupe (7').

La transmission (14) comporte également un deuxième arbre de transmission (27) à joints universels (figures 1 et 2) fixé d'une part à l'arbre d'entrée (18) du premier dispositif de transmission (16) et d'autre part à un arbre de sortie (28) appartenant à un deuxième dispositif de transmission (29). Ce deuxième dispositif de transmission (29) est situé au moins sensiblement dans le plan médian (13) de la faucheuse (1) et comporte un carter (30) et un arbre d'entrée (32) destiné à recevoir un arbre de transmission à joint universel (non représenté) en provenance du véhicule moteur (non représenté). La faucheuse (1) selon la présente invention comporte encore une structure porteuse (33) fixée au mécanisme de coupe (3) au moyen d'éléments de fixage (34).

L'ensemble mécanisme de coupe (3) - structure porteuse (33) est lié à la structure de liaison (2) au moyen d'un dispositif de liaison (35) comportant quatre bielles (37), et un dispositif de verrouillage (non représenté). Les bielles (37) sont destinées, lors du travail, à permettre une certaine liberté de l'ensemble mécanisme de coupe (3) - structure porteuse (33) par rapport à la structure de liaison (2) de manière à permettre audit mécanisme de coupe (3) de suivre les dénivellations du sol, le dispositif de blocage (non représenté) quant à lui est destiné à condamner cette liberté lors du transport de la faucheuse (1). Chaque bielle (37) est située à l'extrémité (10', 10") latérale correspondante du mécanisme de coupe (3) et s'étend, lors du travail, vers l'avant et vers le haut, et est liée à la structure de liaison (2) au moyen d'une première articulation (38) et à la structure porteuse (33) au moyen d'une deuxième articulation (39), lesdites articulations (38, 39) étant du type sphérique.

La faucheuse (1) selon l'invention comporte en sus un dispositif d'andainage (40) formé par deux éléments de guidage (42', 42") situés chacun à chaque extrémité (10', 10") latérale du mécanisme de coupe (3) et, compte tenu du sens d'avance (43) au travail, derrière le front de coupe (44) dudit mécanisme de coupe (3).

Chaque élément de guidage (42', 42") comporte, selon l'exemple représenté, deux rotors d'andainage (45, 46) disposés transversalement à la direction d'avance (4) au travail. Chaque rotor d'andainage (45, 46) est suspendu à la structure porteuse (33) au moyen d'une liaison cylindrique (48, 49) respective d'axe longitudinal (50, 51) au moins sensiblement vertical.

Chaque rotor d'andainage (45, 46) comporte une enveloppe (52, 53) au moins sensiblement cylindrique essentiellement dirigée vers le haut, d'axe longitudinal (54, 55) au moins sensiblement confondu avec l'axe longitudinal (50, 51) de la liaison cylindrique (48, 49) correspondante. Chaque enveloppe (52, 53) comporte des éléments d'entraînement (56) répartis d'une manière au moins sensiblement uniforme sur la périphérie de celle-ci. Selon l'exemple représenté, les éléments d'entraînement (56) sont composés de quatre nervures d'entraînement (57) espacées angulairement d'au moins sensiblement 90°. Chaque nervure d'entraînement (57) est fixée sur la périphérie de l'enveloppe (52, 53) correspondante et s'étend suivant l'axe longitudinal (54, 55) de cette dernière.

A la lumière de la figure 1, on remarquera que les extrémités inférieures (59, 60) des rotors d'andainage (45, 46) s'étendent quelque peu sous le plan de coupe (61) défini par les outils de coupe (6) des éléments de coupe (7, 7', 7") correspondants.

On notera que les deux rotors d'andainage (45, 46), du même élément de guidage (42', 42"), sont disposés l'un par rapport à l'autre de telle sorte qu'une droite horizontale (62), s'appuyant sur la partie frontale desdits rotors d'andainage (45, 46), s'étende en vue de dessus, vers l'arrière en direction du plan médian (13) du mécanisme de coupe (3).

Selon l'exemple représenté, l'enveloppe (52) du rotor d'andainage (45) est de diamètre plus grand que l'enveloppe (53) du rotor d'andainage (46). L'enveloppe (52) du rotor d'andainage (45) situé le plus à l'extérieur s'étend jusque dans le proche voisinage des trajectoires (64, 64', 64") balayées par les outils de coupe (6) des éléments de coupe (7-7', 7-7") correspondants. L'axe longitudinal (50) de la liaison cylindrique (48) liant le rotor d'andainage (45), situé le plus à l'extérieur à la structure porteuse (33), s'étend au moins sensiblement dans le plan vertical (63) dirigé suivant la direction d'avance (4) au travail et s'étendant à mi-distance entre l'axe de rotation (9', 9") de l'élément de coupe (7', 7") situé le plus à l'extérieur du mécanisme de coupe (3) et l'axe de rotation (9) de l'élément de coupe (7) adjacent audit élément de coupe (7', 7"). Compte tenu du diamètre de l'enveloppe (52) du rotor d'andainage (45), selon une vue suivant la direction d'avance (4) au travail, celle-ci chevauche la coiffe d'andainage (11', 11") fixée sur l'élément de coupe (7', 7") correspondant.

L'enveloppe (53) du rotor d'andainage (46) situé le plus près du plan médian (13) du mécanisme de coupe (3) tangente au moins sensiblement l'enveloppe (52) du rotor d'andainage (45) situé le plus à l'extérieur dudit mécanisme de coupe (3).

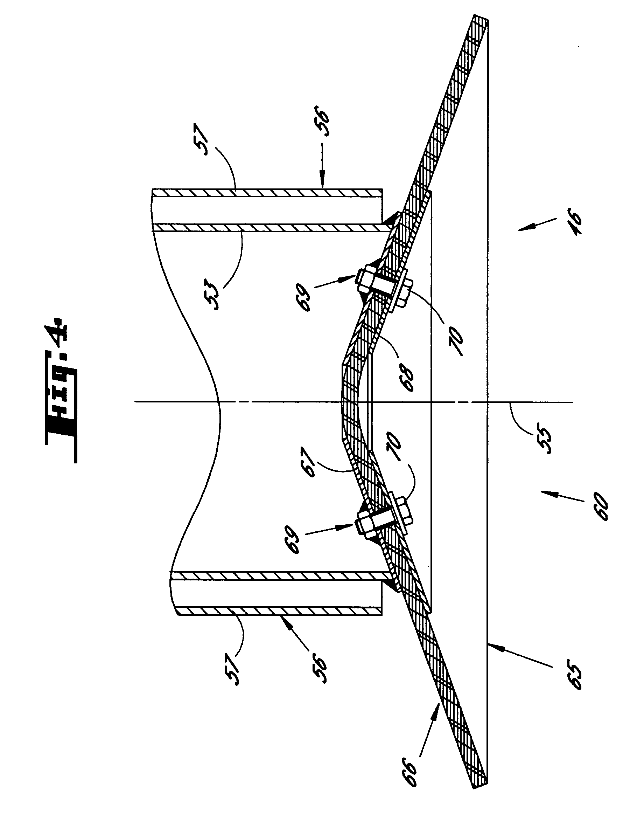

Le rotor d'andainage (46) comporte en sus une partie inférieure (65) essentiellement dirigée radialement vers l'extérieur et s'étendant jusque sous l'extrémité inférieure (59) du rotor d'andainage (45) adjacent. Cette partie inférieure (65) a la forme d'un tronc de cône et comporte une bande (66) en matière souple (figure 4).

Cette bande (66) en matière souple est fixée sur l'extrémité inférieure (60) du rotor d'andainage (46) au moyen d'une première tôle (67), en forme de tronc de cône, solidaire de l'extrémité inférieure de l'enveloppe (53) et d'une deuxième tôle (68), également en forme de tronc de cône, fixée à ladite première tôle (67) au moyen d'organes de fixation (69). La bande (66) est implantée entre les deux tôles (67, 68) entre lesquelles elle est serrée de manière à épouser la forme desdites tôles (67, 68) et s'étend radialement vers l'extérieur du rotor d'andainage (46) jusque sous l'extrémité inférieure (59) du rotor d'andainage (45) adjacent. On notera également que la deuxième tôle (68) est diamétralement plus grande que la première tôle (67) de manière qu'elle s'étende radialement au-delà de ladite première tôle (67).

Selon l'exemple représenté, les organes de fixation (69) sont constitués de boulons (70) traversant de part en part les tôles (67, 68) et la bande (66) en matière souple.

Il convient encore de noter que les rotors d'andainage (45, 46) sont destinés à tourner autour d'axes de rotation (71, 72) respectifs au moins sensiblement verticaux.

Selon cet exemple de réalisation représenté, les axes de rotation (71, 72) des rotors d'andainage (45, 46) sont au moins sensiblement confondus avec les axes longitudinaux (50, 51) des liaisons cylindriques (48, 49) liant lesdits rotors d'andainage (45, 46) à la structure porteuse (33).

Il est par ailleurs prévu que les rotors d'andainage (45, 46) d'un élément de guidage (42', 42") soient entraînés en rotation au moyen d'un mécanisme d'entraînement (73', 73") respectif, situé au-dessus desdits rotors d'andainage (45, 46) de préférence, situé au-dessus de la structure porteuse (33) fixée au mécanisme de coupe (3) tel que représenté sur les figures 1 et 2.

Selon la présente idée inventive, les rotors d'andainage (45, 46) des éléments de guidage (42', 42") sont entraînés en rotation de manière à andainer le fourrage vers le plan médian (13) du mécanisme de coupe (3).

A cet effet, les rotors d'andainage (45, 46) de l'élément de guidage (42') tournent, selon une vue de dessus (figure 2), dans le sens de rotation (74) inverse à celui des aiguilles d'une montre et, les rotors d'andainage (45, 46) de l'élément de guidage (42") tournent, selon une vue de dessus (figure 2), dans le même sens de rotation (75) que celui des aiguilles d'une montre.

Chaque mécanisme d'entraînement (73', 73") comporte une courroie de transmission (76', 76") s'étendant au moins sensiblement horizontalement au-dessus de la structure porteuse (33). A cet effet, chaque rotor d'andainage (45, 46) est doté d'une poulie d'entraînement (77, 78) située au-dessus de la liaison cylindrique (48, 49) correspondante. On remarquera que le diamètre de la poulie d'entraînement (77) du rotor d'andainage (45) est plus grand que le diamètre de l'enveloppe (52) correspondante, alors que le diamètre de la poulie d'entraînement (78) du rotor d'andainage (46) est plus petit que le diamètre de l'enveloppe (53) correspondante. Une telle conception permet d'obtenir une vitesse linéaire périphérique du rotor d'andainage (46), situé le plus près du plan médian (13), supérieure à la vitesse linéaire périphérique du rotor d'andainage (45) situé le plus à l'extérieur du mécanisme de coupe (3).

On remarquera également que chaque mécanisme d'entraînement (73', 73") est doté d'un tendeur (80) destiné à assurer une bonne tension de la courroie de transmission (76', 76") correspondante.

Le mécanisme d'entraînement (73') de l'élément de guidage (42'), situé à l'extrémité (10') où ledit mécanisme de coupe (3) est entraîné, reçoit le mouvement directement à partir de la transmission (14) animant ledit mécanisme de coupe (3). A cet effet, il est prévu une poulie d'entraînement (81') destinée à entraîner la courroie de transmission (76') du mécanisme d'entraînement (73'). Cette poulie d'entraînement (81') est fixée d'une manière au moins sensiblement concentrique sur l'arbre de sortie supérieur (19) du premier dispositif de transmission (16) par lequel elle est entraînée en rotation.

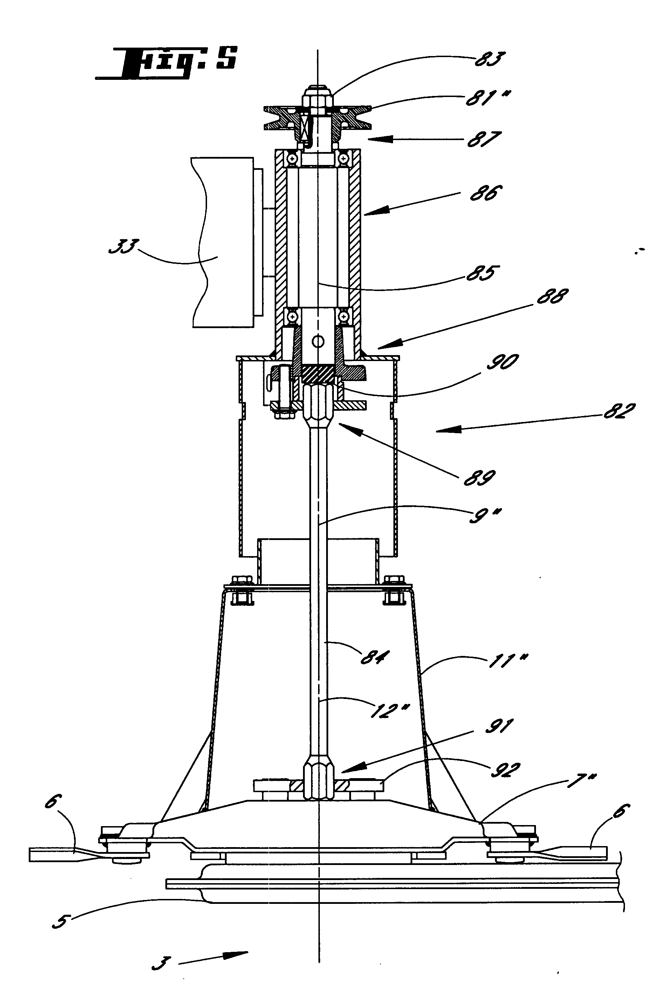

Le mécanisme d'entraînement (73") de l'élément de guidage (42") situé à l'autre extrémité (10") du mécanisme de coupe (3), reçoit le mouvement directement à partir dudit mécanisme de coupe (3). A cet effet est prévu une deuxième poulie d'entraînement (81") destinée à entraîner la courroie de transmission (76") du mécanisme d'entraînement (73"). Cette deuxième poulie d'entraînement (81") est entraînée en rotation par l'élément de coupe (7") au moyen d'une transmission (82) (figure 5) comportant deux arbres de transmission (83, 84). L'arbre de transmission (83), d'axe longitudinal (85) au moins sensiblement confondu avec l'axe de rotation (9") de l'élément de coupe (7"), est lié à la structure porteuse (33) au moyen d'une liaison cylindrique (86). A l'extrémité supérieure (87) de l'arbre de transmission (83) est fixée, d'une manière au moins sensiblement concentrique, la poulie d'entraînement (81"). A l'extrémité inférieure (88) l'arbre de transmission (83) est liée la partie supérieure (89) de l'arbre de transmission (84) au moyen d'une liaison élastique (90) et l'extrémité inférieure (91) dudit arbre de transmission (84) est liée à l'élément de coupe (7") au moyen d'un organe d'entraînement (92) solidaire de l'élément de coupe (7").

A la lumière de la figure 1, on remarquera en sus que chaque mécanisme d'entraînement (73', 73") est couvert par un capot (94) destiné d'une part à protéger l'utilisateur ou d'autres personnes avoisinantes et, d'autre part à abriter le mécanisme d'entraînement (73', 73") d'éléments extérieurs comme par exemple du produit coupé, des pierres, etc...

On remarquera encore que le dispositif d'andainage (40), équipant la faucheuse (1) selon l'exemple de réalisation représenté, est symétrique par rapport au plan médian (13) du mécanisme de coupe (3).

La faucheuse (1), telle que décrite ci-avant, fonctionne de la manière suivante.

Au travail, la faucheuse (1) est mue dans une parcelle couverte de produits à couper. Les végétaux sont d'abord coupés proprement près du sol par les outils de coupe (6) des éléments de coupe (7, 7', 7") animés en rotation par la transmission (14).

Avec cette faucheuse (1), on obtient non seulement une coupe parfaite des végétaux, mais également un bon regroupement du produit coupé par les outils de coupe. En effet, au travail, le produit coupé aux alentours des extrémités (10', 10") du mécanisme de coupe (3) est dévié une première fois par les éléments de coupe (7', 7") et leurs coiffes d'andainage (11', 11") correspondantes, lesquels le projettent directement sur le rotor d'andainage (45) sans que ledit produit coupé ne vienne en contact avec le sol. Le rotor d'andainage (45), de part sa rotation, projette le produit coupé sur le rotor d'andainage (46) lequel, de part sa rotation, véhicule ledit produit coupé en direction du plan median (13), de manière à regrouper la totalité du produit coupé sur toute la largeur fauchée par la faucheuse (1) en un andain de faible largeur.

On notera, qu'à partir de l'instant ou le produit est coupé par les outils de coupe (6) des éléments de coupe (7, 7', 7") correspondants, il est déposé au sol seulement après avoir été regroupé en un andain de faible largeur par le dispositif d'andainage (40) grâce notamment à la disposition des rotors d'andainage (45, 46) lesquels sont situés directement derrière les éléments de coupe (7, 7', 7"), et à la partie inférieure (65) des rotors d'andainage (46) laquelle véhicule le produit coupé s'étendant aux alentours de l'extrémité inférieure (60) du rotor d'andainage (46), ainsi qu'à la vitesse d'avancement au travail.

Finalement, différentes modifications restent possibles, notamment en ce qui concerne la constitution des divers éléments ou par substitution d'équivalents techniques, sans pour autant sortir du domaine de protection défini dans les revendications.

Il est notamment parfaitement imaginable un moyen de réglage permettant de déplacer en hauteur les rotors d'andainage (45, 46) de manière à pouvoir régler la position de ces derniers par rapport au sol. Pour ce faire, il est parfaitement concevable de suspendre chaque rotor d'andainage à la structure porteuse (33) au moyen d'une liaison cylindrique bridée sur ladite structure porteuse (33).

Il est également concevable de disposer, selon une vue suivant la direction d'avance (4) au travail, le rotor d'andainage (46), situé le plus près du plan médian (13) du mécanisme de coupe (3), de telle sorte qu'il chevauche quelque peu le rotor d'andainage (45), situé le plus à l'extérieur.

Selon la largeur du mécanisme de coupe (3), il est parfaitement concevable d'équiper la faucheuse (1) d'un dispositif d'andainage comportant des enveloppes (52 ; 53) de rotor d'andainage (45 ; 46) de diamètres au moins sensiblement égaux. De cette façon, lorsque le mécanisme de coupe (3) a une largeur de travail relativement petite, le dispositif d'andainage (40) pourra être équipé de quatre rotors d'andainage (46) comportant des enveloppes (53), et lorsque le mécanisme de coupe (3) a une largeur de travail relativement grande, le dispositif d'andainage (40) pourra être équipé de quatre rotors d'andainage (45) comportant des enveloppes (52).

Il est également envisageable d'équiper l'élément de guidage (42', 42") de trois rotors d'andainage ou plus, disposés l'un par rapport à l'autre d'une manière semblable à celle décrite précédemment dans la description de l'exemple de réalisation représenté.

En outre, il est parfaitement possible d'adapter ce dispositif d'andainage (40) muni de deux éléments de guidage (42', 42") sur une faucheuse d'un autre type que celle représentée sur les différentes figures, comme par exemple sur les faucheuses à tambours, à doigts, les faucheuses traînées ou semi-portées, etc...

Lorsqu'on souhaite andainer le fourrage coupé qu'à une seule extrémité du mécanisme de coupe (3), notamment sur les faucheuses s'étendant latéralement au véhicule moteur auquel elles sont liées, il est parfaitement concevable d'équiper ladite faucheuse d'un seul élément de guidage (42', 42") s'étendant à l'extrémité souhaitée.

## Revendications

1. Faucheuse comportant :
- une structure de liaison (2) destinée à lier ladite faucheuse à un véhicule moteur ;
- un mécanisme de coupe (3) muni d'éléments de coupe (7, 7', 7") animés comportant des outils de coupe (6) ;
et
- un dispositif d'andainage (40) destiné à déplacer latéralement, vers le plan médian (13) du mécanisme de coupe (3), le produit coupé par les éléments de coupe (7, 7', 7") avant que celui-ci ne soit déposé sur le sol, ledit dispositif d'andainage (40) comportant au moins un élément de guidage (42', 42") du produit coupé situé dans le voisinage de l'une des extrémités (10', 10") latérales du mécanisme de coupe (3) et, compte tenu du sens d'avance (43) au travail, derrière le front de coupe (44) du mécanisme de coupe (3), ledit élément de guidage (42', 42") comprenant au moins deux rotors (45, 46) disposés transversalement à la direction d'avance (4) au travail et d'axe de rotation (71, 72) dirigé vers le haut durant le travail, lesdits rotors (45, 46) étant suspendus à une structure porteuse (33) liée au mécanisme de coupe (3) et/ou à la structure de liaison (2), lesdits rotors (45, 46) étant entraînés en rotation au moyen d'un mécanisme d'entraînement (73', 73") ;
***caractérisée en ce* que** lesdits rotors (45, 46) sont des rotors d'andainage disposés dans le voisinage immédiat l'un de l'autre et uniquement suspendus à la structure porteuse (33) par le haut et que l'extrémité inférieure (59, 60) d'un rotor d'andainage (45, 46) s'étend vers le bas au moins jusqu'au plan de coupe (61) défini par les outils de coupe (6) des éléments de coupe (7,7',7").

2. Faucheuse selon la revendication 1, ***caractérisée en ce* que** les rotors d'andainage (45, 46) d'un même élément de guidage (42', 42") sont disposés l'un par rapport à l'autre, de telle sorte qu'une droite horizontale (62), s'appuyant sur la partie frontale desdits rotors d'andainage (45, 46), s'étende en vue de dessus vers l'arrière en direction du plan médian (13) du mécanisme de coupe (3).

3. Faucheuse selon la revendication 1 ou 2, ***caractérisée en ce* qu'**en vue suivant la direction d'avance (4) au travail, le rotor d'andainage (46) situé le plus près du plan médian (13) du mécanisme de coupe (3), tangente au moins sensiblement le rotor d'andainage (45) situé le plus à l'extérieur ou chevauche quelque peu celui-ci.

4. Faucheuse selon l'une quelconque des revendications 1 à 3, ***caractérisée en ce* qu'**au moins le rotor d'andainage (46) situé le plus près du plan médian (13) du mécanisme de coupe (3) comporte une enveloppe (53) essentiellement dirigée vers le haut et une partie inférieure (65) essentiellement dirigée radialement vers l'extérieur.

5. Faucheuse selon la revendication 4, ***caractérisée en ce* que** ladite partie inférieure (65) essentiellement dirigée radialement vers l'extérieur s'étend jusque sous l'extrémité inférieure (59) du rotor d'andainage (45) adjacent.

6. Faucheuse selon la revendication 4 ou 5, ***caractérisée en ce* que** ladite partie inférieure (65), essentiellement dirigée radialement vers l'extérieur, a la forme d'un tronc de cône.

7. Faucheuse selon l'une quelconque des revendications 1 à 6, ***caractérisée en ce* que** la partie inférieure (65) d'un rotor d'andainage (45, 46) est réalisée en matière souple.

8. Faucheuse selon l'une quelconque des revendications 1 à 7, ***caractérisée en ce* que** le rotor d'andainage (45), situé le plus à l'extérieur, comporte une enveloppe (52) qui s'étend jusque dans le proche voisinage des trajectoires (64, 64', 64") balayées par les outils (6) de l'élément de coupe (7', 7") situé le plus à l'extérieur du mécanisme de coupe (3) et de l'élément de coupe (7) adjacent audit élément de coupe (7',7").

9. Faucheuse selon l'une quelconque des revendications 1 à 8, ***caractérisée en ce* que** l'axe de rotation (71) du rotor d'andainage (45), situé le plus à l'extérieur, s'étend au moins sensiblement dans le plan vertical (63) dirigé suivant la direction d'avance (4) au travail et s'étendant à mi-distance entre l'axe de rotation (9',9") de l'élément de coupe (7',7") situé le plus à l'extérieur du mécanisme de coupe (3) et l'axe de rotation (9) de l'élément de coupe (7) adjacent audit élément de coupe (7',7").

10. Faucheuse selon l'une quelconque des revendications 1 à 9, ***caractérisée en ce* que** l'élément de coupe (7', 7") extérieur, situé à l'extrémité du mécanisme de coupe (3) où est prévu un élément de guidage (42', 42"), comporte une coiffe d'andainage (11', 11") et qu'en vue suivant la direction d'avance (4) au travail, le rotor d'andainage (45) correspondant, situé le plus à l'extérieur, tangente au moins sensiblement ladite coiffe d'andainage (11', 11") ou chevauche quelque peu celle-ci.

11. Faucheuse selon l'une quelconque des revendications 1 à 10, ***caractérisée en ce* que** l'axe de rotation (71, 72) d'un rotor d'andainage (45, 46) est au moins sensiblement vertical.

12. Faucheuse selon l'une quelconque des revendications 1 à 11, ***caractérisée en ce* que** les rotors d'andainage (45, 46) sont déplaçables en hauteur.

13. Faucheuse selon les revendications 4 et 8, ***caractérisée en ce* que** l'enveloppe (52, 53) de chaque rotor d'andainage (45, 46) est au moins sensiblement cylindrique.

14. Faucheuse selon la revendication 13, ***caractérisée en ce* que** l'enveloppe (52, 53) de l'un au moins des rotors d'andainage (45, 46) d'un élément de guidage (42', 42") comporte des éléments d'entraînement (56) répartis de manière au moins sensiblement uniforme.

15. Faucheuse selon la revendication 14, ***caractérisée en ce* que** lesdits éléments d'entraînement (56) sont des nervures d'entraînement (57) s'étendant au moins sensiblement suivant une génératrice de ladite enveloppe (52, 53).

16. Faucheuse selon la revendication 14 ou *15,* ***caractérisée en ce* qu'**au moins l'enveloppe (53) du rotor d'andainage (46), situé le plus près du plan médian (13) du mécanisme de coupe (3), est pourvue d'éléments d'entraînement (56).

17. Faucheuse selon l'une quelconque des revendications 1 à 16, ***caractérisée en ce* que** la vitesse linéaire périphérique du rotor d'andainage (46), situé le plus près du plan médian (13), est égale ou supérieure à la vitesse linéaire périphérique du rotor d'andainage (45), situé le plus à l'extérieur.

18. Faucheuse selon l'une quelconque des revendications 1 à 17, ***caractérisée en ce* que** le mécanisme d'entraînement (73', 73") des rotors d'andainage (45, 46) d'un élément de guidage (42', 42") est situé au-dessus desdits rotors d'andainage (45, 46).

19. Faucheuse selon la revendication 18, ***caractérisée en ce* que** le mécanisme d'entraînement (73', 73") est situé au-dessus de la structure porteuse (33).

20. Faucheuse selon la revendication 18 ou 19, ***caractérisée en ce* que** le mécanisme d'entraînement (73', 73") comporte une courroie de transmission (76', 76") s'étendant au moins sensiblement horizontalement.

21. Faucheuse selon l'une quelconque des revendications 1 à 20, ***caractérisée en ce* qu'**un élément de guidage (42', 42") est disposé à chaque extrémité (10', 10") latérale du mécanisme de coupe (3), ces deux éléments de guidage (42', 42") formant le dispositif d'andainage (40).

22. Faucheuse selon la revendication 21, ***caractérisée en ce* que** le mécanisme d'entraînement (73') de l'élément de guidage (42'), situé à l'extrémité (10') où le mécanisme de coupe (3) est entraîné, reçoit le mouvement directement à partir d'une transmission (14) animant ledit mécanisme de coupe (3), tandis que le mécanisme d'entraînement (73") de l'élément de guidage (42"), situé à l'autre extrémité (10") du mécanisme de coupe (3), reçoit le mouvement à partir dudit mécanisme de coupe (3).

## Patentansprüche

1. Mähmaschine, die
- eine Verbindungskonstruktion (2) zur Verbindung der Mähmaschine mit einem Motorfahrzeug;
- einen Schneidmechanismus (3), der mit Schneidwerkzeugen (6) aufweisenden bewegbaren Schneidelementen (7, 7', 7") versehen ist;
und
- eine Schwadvorrichtung (40), die das durch die Schneidelemente (7, 7', 7") geschnittene Gut seitlich zur mittleren Ebene (13) des Schneidmechanismus (3) bewegen soll, bevor es auf dem Boden abgelegt wird, wobei die Schwadvorrichtung (40) mindestens ein Element (42', 42") zur Führung des Schnittguts aufweist, das sich in der Nähe eines der Seitenenden (10', 10") des Schneidmechanismus (3) und, in Arbeitsvorschubrichtung (43) gesehen, hinter der Schnittfront (44) des Schneidmechanismus (3) befindet, wobei das Führungselement (42', 42") mindestens zwei Rotoren (45, 46) umfaßt, die quer zur Arbeitsvorschubrichtung (4) ausgerichtet sind und eine im Betrieb nach oben ausgerichtete Drehachse (71, 72) aufweisen, wobei die Rotoren (45, 46) an einem mit dem Schneidmechanismus (3) und/oder der Verbindungskonstruktion (2) verbundenen Traggestell (33) aufgehängt sind und mittels eines Antriebsmechanismus (73', 73") drehangetrieben werden; umfaßt,
***dadurch gekennzeichnet,* daß** es sich bei den Rotoren (45, 56) um Schwadrotoren handelt, die in unmittelbarer Nähe voneinander angeordnet und nur von oben am Traggestell (33) aufgehängt sind, und daß sich das untere Ende (59, 60) eines Schwadrotors (45, 46) mindestens bis zu der durch die Schneidwerkzeuge (6) der Schneidelemente (7, 7', 7") definierten Schnittebene (61) nach unten erstreckt.

2. Mähmaschine nach Anspruch 1, ***dadurch gekennzeichet*,** da*ß* die Schwadrotoren (45, 46) eines gleichen Führungselements (42', 42") bezüglich einander so angeordnet sind, daß eine sich auf den Vorderteil der Schwadrotoren (45, 46) stützende horizontale Gerade, von oben gesehen, in Richtung der mittleren Ebene (13) des Schneidmechanismus (3) nach hinten verläuft.

3. Mähmaschine nach Anspruch 1 oder 2, ***dadurch gekennzeichnet,* daß** der sich am nächsten zur mittleren Ebene (13) des Schneidmechanismus (3) befindende Schwadrotor (46), in Arbeitsvorschubrichtung (4) gesehen, den sich am weitesten außen befindenden Schwadrotor (45) zumindest im wesentlichen berührt oder diesen etwas überschneidet.

4. Mähmaschine nach irgend einem der Ansprüche 1 bis 3, ***dadurch gekennzeichnet,* daß** sich zumindest der Schwadrotor (46), der sich am nächsten zur mittleren Ebene (13) des Schneidmechanismus (3) befindet, eine im wesentlichen nach oben ausgerichtete Umhüllung (53) und einen im wesentlichen radial nach außen gerichteten unteren Teil (65) aufweist.

5. Mähmaschine nach Anspruch 4, ***dadurch gekennzeichnet,* daß** sich der im wesentlichen radial nach außen gerichtete untere Teil (65) bis unter das untere Ende (59) des benachbarten Schwadrotors (45) erstreckt.

6. Mähmaschine nach Anspruch 4 oder 5, ***dadurch gekennzeichnet,* daß** der im wesentlichen radial nach außen gerichtete untere Teil (65) kegelstumpfförmig ausgebildet ist.

7. Mähmaschine nach irgend einem der Ansprüche 1 bis 6, ***dadurch gekennzeichnet,* daß** der untere Teil (65) eines Schwadrotors (45, 46) aus einem flexiblen Material hergestellt ist.

8. Mähmaschine nach irgend einem der Ansprüche 1 bis 7, ***dadurch gekennzeichnet,* daß** der sich am weitesten außen befindende Schwadrotor (45) eine Umhüllung (52) aufweist, die sich bis in unmittelbare Nähe der von den Werkzeugen (6) des sich am weitesten außen vom Schneidmechanismus (3) befindenden Schneidelements (7', 7") und des sich neben dem Schneidelement (7', 7") befindenden Schneidelements (7) beschriebenen Bahnen (64, 64', 64") erstreckt.

9. Mähmaschine nach irgend einem der Ansprüche 1 bis 8, ***dadurch gekennzeichnet,* daß** die Drehachse (71) des sich am weitesten außen befindenden Schwadrotors (45) zumindest im wesentlichen in der in Arbeitsvorschubrichtung (4) ausgerichteten vertikalen Ebene (63) verläuft, die sich auf halbem Wege zwischen der Drehachse (9', 9") des sich am weitesten außen vom Schneidmechanismus (3) befindenden Schneidelements (7', 7") und der Drehachse (9) des sich neben dem Schneidelement (7', 7") befindenden entsprechenden Schneidelements (7) erstreckt.

10. Mähmaschine nach irgend einem der Ansprüche 1 bis 9, ***dadurch gekennzeichnet,* daß** das sich an dem Ende des Schneidmechanismus (3), an dem ein Führungselement (42', 42") vorgesehen ist, befindende äußere Schneidelement (7', 7") eine Schwadabdeckung (11', 11") aufweist und daß der sich am weitesten außen befindende entsprechende Schwadrotor (45), in Arbeitsvorschubrichtung (4) gesehen, die Schwadabdeckung (11', 11") zumindest im wesentlichen berührt oder sie etwas überschneidet.

11. Mähmaschine nach irgend einem der Ansprüche 1 bis 10, ***dadurch gekennzeichnet,* daß** die Drehachse (71, 72) eines Schwadrotors (45, 46) zumindest im wesentlichen vertikal verläuft.

12. Mähmaschine nach irgend einem der Ansprüche 1 bis 11, ***dadurch gekennzeichnet,* daß** die Schwadrotoren (45, 46) in der Höhe verschiebbar sind.

13. Mähmaschine nach den Ansprüchen 4 und 8, ***dadurch gekennzeichnet*, daß** die Umhüllung (52, 53) jedes Schwadrotors (45, 46) zumindest im wesentlichen zylindrisch ist.

14. Mähmaschine nach Anspruch 13, **dadurch gekennzeichnet, daß** die Umhüllung (52, 53) mindestens eines der Schwadrotoren (45, 46) eines Führungselements (42', 42") zumindest im wesentlichen gleichmäßig verteilte Antriebselemente (56) enthält.

15. Mähmaschine nach Anspruch 14, ***dadurch gekennzeichnet,* daß** die Antriebselemente (56) Antriebsrippen (57) sind, die sich zumindest im wesentlichen entlang einer Erzeugenden der Umhüllung (52, 53) erstrecken.

16. Mähmaschine nach Anspruch 14 oder 15, ***dadurch gekennzeichnet,* daß** zumindest die Umhüllung (53) des sich am nächsten zur mittleren Ebene (13) des Schneidmechanismus (3) befindenden Schwadrotors (46) mit Antriebselementen (56) versehen ist.

17. Mähmaschine nach irgend einem der Ansprüche 1 bis 16, ***dadurch gekennzeichnet*, daß** die lineare Umfangsgeschwindigkeit des sich am nächsten zur mittleren Ebene (13) befindenden Schwadrotors (46) der linearen Umfangsgeschwindigkeit des sich am weitesten außen befindenden Schwadrotors (45) gleich oder größer ist.

18. Mähmaschine nach irgend einem der Ansprüche 1 bis 17, ***dadurch gekennzeichnet,* daß** sich der Antriebsmechanismus (73', 73") der Schwadrotoren (45, 46) eines Führungselements (42', 42") über den Schwadrotoren (45, 46) befindet.

19. Mähmaschine nach Anspruch 18, ***dadurch gekennzeichnet,* daß** sich der Antriebsmechanismus (73', 73") über dem Traggestell (33) befindet.

20. Mähmaschine nach Anspruch 18 oder 19, ***dadurch gekennzeichnet,* daß** der Antriebsmechanismus (73', 73") einen sich zumindest im wesentlichen horizontal erstreckenden Treibriemen (76', 76") umfaßt.

21. Mähmaschine nach irgend einem der Ansprüche 1 bis 20, ***dadurch gekennzeichnet,* daß** an jedem Seitenende (10', 10") des Schneidmechanismus (3) ein Führungselement (42', 42") angeordnet ist, wobei diese beiden Führungselemente (42', 42") die Schwadvorrichtung (40) bilden.

22. Mähmaschine nach Anspruch 21, ***dadurch gekennzeichnet,* daß** der sich an dem Ende (10'), an dem der Schneidmechanismus (3) angetrieben wird, befindende Antriebsmechanismus (73') des Führungselements (42') die Bewegung direkt von einem Kraftübertragungssystem (14) erhält, das den Schneidmechanismus (3) in Gang setzt, während der sich an dem anderen Ende (10") des Schneidmechanismus (3) befindende Antriebsmechanismus (73") des Führungselements (42") die Bewegung von dem Schneidmechanismus (3) erhält.

## Claims

1. Mower comprising:
- a connecting structure (2) intended to connect the said mower to a motor vehicle;
- a cutting mechanism (3) equipped with driven cutting elements (7, 7', 7") comprising cutting tools (6);
and
- a windrowing device (40) intended to move the product cut by the cutting elements (7, 7', 7") laterally towards the mid-plane (13) of the cutting mechanism (3) before this product is set down on the ground, the said windrowing device (40) comprising at least one element (42', 42") for guiding the cut product located near one of the lateral ends (10', 10") of the cutting mechanism (3) and, bearing in the mind the direction of forward travel (43) during work, behind the cutting front (44) of the cutting mechanism (3), the said guiding element (42', 42") comprising at least two rotors (45, 46) arranged transversely to the direction of forward travel (4) during work and with an axis of rotation (71, 72) directed upwards during work, the said rotors (45, 46) being suspended from a carrying structure (33) connected to the cutting mechanism (3) and/or to the connecting structure (2), the said rotors (45, 46) being driven in rotation by means of a drive mechanism (73', 73");
***characterized in* that** the said rotors (45, 46) are windrowing rotors located in close proximity to one another and only suspended from the carrying structure (33) from the top and in that the lower end (59, 60) of a windrowing rotor (45, 46) extends downwards at least as far as the cutting plane (61) defined by the cutting tools (6) of the cutting elements (7, 7', 7").

2. Mower according to Claim 1, ***characterized in* that** the windrowing rotors (45, 46) of one and the same guiding element (42', 42") are arranged one with respect to the other in such a way that a horizontal straight line (62) resting across the front part of the said windrowing rotors (45, 46) extends, when viewed from above, backwards in the direction of the mid-plane (13) of the cutting mechanism (3).

3. Mower according to Claim 1 or 2, ***characterized in* that**, when viewed in the direction of forward travel (4) during work, the windrowing rotor (46) located closest to the mid-plane (13) of the cutting mechanism (3) is at least substantially tangential to the outermost windrowing rotor (45) or overlaps the latter slightly.

4. Mower according to any one of Claims 1 to 3, ***characterized in* that** at least the windrowing rotor (46) located closest to the mid-plane (13) of the cutting mechanism (3) has a casing (53) directed essentially upwards and a lower part (65) directed substantially radially outwards.

5. Mower according to Claim 4, ***characterized in* that** the said lower part (65) directed essentially radially outwards extends as far as under the lower end (59) of the adjacent windrowing rotor (45).

6. Mower according to Claim 4 or 5, ***characterized in* that** the said lower part (65) directed essentially radially outwards is in the shape of a cone trunk.

7. Mower according to any one of Claims 1 to 6, ***characterized in* that** the lower part (65) of a windrowing rotor (45, 46) is made of flexible material.

8. Mower according to any one of Claims 1 to 7, ***characterized in* that** the outermost windrowing rotor (45) has a casing (52) which extends as far as the close vicinity of the paths (64, 64', 64") swept by the tools (6) of the outermost cutting element (7', 7") of the cutting mechanism (3) and of the cutting element (7) adjacent to the said cutting element (7', 7").

9. Mower according to any one of Claims 1 to 8, ***characterized in* that** the axis of rotation (71) of the outermost windrowing rotor (45) extends at least substantially in the vertical plane (63) directed in the direction of forward travel (4) during work and extending mid-way between the axis of rotation (9', 9") of the outermost cutting element (7', 7") of the cutting mechanism (3) and the axis of rotation (9) of the cutting element (7) adjacent to the said cutting element (7', 7").

10. Mower according to any one of Claims 1 to 9, ***characterized in* that** the outer cutting element (7',7"), located at the end of the cutting mechanism (3) where a guiding element (42', 42") is provided, has a windrowing cap (11', 11") and in that, when viewed in the direction of forward travel (4) during work, the corresponding outermost windrowing rotor (45) is at least substantially tangential to the said windrowing cap (11', 11") or overlaps the latter slightly.

11. Mower according to any one of Claims 1 to 10, ***characterized in* that** the axis of rotation (71, 72) of a windrowing rotor (45, 46) is at least substantially vertical.

12. Mower according to any one of Claims 1 to 11, ***characterized in* that** the windrowing rotors (45, 46) are height-adjustable.

13. Mower according to Claims 4 and 8, ***characterized in* that** the casing (52, 53) of each windrowing rotor (45, 46) is at least substantially cylindrical.

14. Mower according to Claim 13, ***characterized in* that** the casing (52, 53) of at least one of the windrowing rotors (45, 46) of a guiding element (42', 42") comprises drive elements (56) distributed at least substantially uniformly.

15. Mower according to Claim 14, ***characterized in* that** the said drive elements (56) are driving ribs (57) extending at least substantially along a generatrix of the said casing (52, 53).

16. Mower according to Claim 14 or 15, ***characterized in* that** at least the casing (53) of the windrowing rotor (46) closest to the mid-plane (13) of the cutting mechanism (3) is provided with drive elements (56).

17. Mower according to any one of Claims 1 to 16, ***characterized in* that** the peripheral linear speed of the windrowing rotor (46) closest to the mid-plane (13) is equal to or greater than the peripheral linear speed of the outermost windrowing rotor (45).

18. Mower according to any one of Claims 1 to 17, ***characterized in* that** the mechanism (73', 73") for driving the windrowing rotors (45, 46) of a guiding element (42', 42") is located above the said windrowing rotors (45, 46).

19. Mower according to Claim 18, ***characterized in* that** the drive mechanism (73', 73") is located above the carrying structure (33).

20. Mower according to Claim 18 or 19, ***characterized in* that** the drive mechanism (73', 73") comprises a transmission belt (76', 76") extending at least substantially horizontally.

21. Mower according to any one of Claims 1 to 20, ***characterized in* that** a guiding element (42', 42") is arranged at each lateral end (10', 10") of the cutting mechanism (3), these two guiding elements (42', 42") forming the windrowing device (40).

22. Mower according to Claim 21, ***characterized in* that** the drive mechanism (73') for the guiding element (42') located at the end (10') from which the cutting mechanism (3) is driven receives the movement directly from a transmission (14) driving the said cutting mechanism (3), while the drive mechanism (73") for the guiding element (42") located at the other end (10") of the cutting mechanism (3) receives the movement from the said cutting mechanism (3).
